# EUROPÄISCHE PATENTANMELDUNG

(11) **EP 4 524 669 A1**
(43) Veröffentlichungstag der Anmeldung: **19.03.2025**
(21) Anmeldenummer: 23197386.8
(22) Anmeldetag: 14.09.2023
(51) Int. Cl.: G05B 23/02, G05B 19/418, G06F 3/04817

(54) **VERFAHREN ZUM BEDIENEN UND BEOBACHTEN EINER ZU STEUERNDEN TECHNISCHEN ANLAGE, BEDIEN- UND BEOBACHTUNGSSYSTEM UND PROZESSLEITSYSTEM**

(71) Anmelder: Siemens Aktiengesellschaft, 80333 München (DE)
(72) Erfinder: Lutz, Benjamin, 76327 Pfinztal (DE)
(74) Vertreter: Siemens Patent Attorneys

(57) **Zusammenfassung**

Verfahren und System zum Bedienen und Beobachten einer technischen Anlage, in der ein Prozess mittels eines Prozessleitsystems (PL) gesteuert wird, wobei das Prozessleitsystem einen Operator Station Server (OS_S1) und einen Operator Station Client (OS_C) aufweist, und mit dem Prozess verbundene Prozessobjekte (POi) auf Prozessabbilder (PI) der Server des Prozessleitsystems (PL) verteilt sind, und zur Prozessbeobachtung eine grafische Benutzeroberfläche (UI) auf dem Client (OS_C) zur Darstellung von Anlagenbildern und zugehöriger Bildfenster mit zu den Prozessobjekten (POi) gehörigen Symbolen und Anzeigen vorgesehen ist, wobei folgende Schritte ausgeführt werden:
- mittels eines Visualisierungsdienstes (VS) des Servers (OS_S1) wird ermittelt, welche Anlagenbilder und Bildfenster geöffnet sind, welche Prozessobjekte (POi) pro geöffnetem Anlagenbild und geöffneten Bildfenster vorhanden sind, und welche dieser Prozessobjekte Meldungen erzeugen,
- dass kontinuierlich nur für die Prozessobjekte der geöffneten Anlagenbilder und Bildfenster alle Meldungen nach vorgebbaren Kriterien gefiltert werden und die wichtigste, neueste und nicht quittierte Meldung ermittelt wird, und
- dass zumindest ein Indikator (AO) auf der Benutzeroberfläche einen Operator auf das Vorliegen der wichtigsten, neuesten und nicht quittierten Meldung im Kontext der geöffneten Anlagenbilder und Bildfenster hinweist.

## Beschreibung

Die Erfindung betrifft ein Verfahren zum Bedienen und Beobachten einer zu steuernden technischen Anlage gemäß dem Oberbegriff des Anspruchs 1. Die Erfindung betrifft ferner ein Bedien- und Beobachtungssystem gemäß dem Oberbegriff des Anspruchs 7 zur Durchführung des Verfahrens und ein entsprechend geeignetes Prozessleitsystem.

Moderne Automatisierungssysteme oder Prozessleitsysteme, wie sie in hochautomatisierten verfahrenstechnischen Anlagen wie Kraftwerken oder verfahrenstechnischen Anlagen der Prozessindustrie üblicherweise verwendet werden, bilden die Schnittstelle zwischen einem in der Anlage ablaufenden technischen Prozess und dem Bedienpersonal, welches den technischen Prozess steuern und/oder überwachen soll. Mittels eines Bedien- und Beobachtungssystems eines Automatisierungssystems kann das Bedienpersonal auf alle relevanten Prozessdaten zugreifen und bei Bedarf in Form von Bedienhandlungen auf den Prozess einwirken.

Gerade bei der Überwachung vergleichsweise komplexer technischer Anlagen werden abnormale Zustände, die beispielsweise auf Fehlfunktionen einzelner Komponenten des Automatisierungssystems schließen lassen, und einen Handlungsbedarf für das Bedienpersonal charakterisieren, in Form von Meldungen oder Alarmen auf jeweiligen Anzeigeeinheiten ausgegeben, so dass die Informationen vom Personal wahrgenommen werden können. Ein Alarm entspricht einer Anzeige oder einem Bericht vom Eintreten eines Ereignisses, welches eine unverzügliche Reaktion eines Operators erfordert. Der Operator muss aufgetretene Alarme und Meldungen quittieren. Damit dokumentiert er, dass er die Zustandsänderung zur Kenntnis genommen hat.

### (Bei dem Begriff "Operator" sind Personen mit männlicher, weiblicher oder anderer Geschlechteridentität mit umfasst)

Die Darstellung der Alarme ist von wesentlicher Bedeutung für die Gebrauchstauglichkeit eines Meldesystems.

Häufig werden Alarme in so genannten Meldefolgeanzeigen tabellarisch dargestellt, wobei die Einzelmeldungen nach verschiedenen Kriterien sortiert, priorisiert oder evaluiert werden können. Für eine detaillierte Evaluierung einzelner Alarme können die Meldefolgeanzeigen, die systemisch bereitgestellt werden, mit spezifischen Parametern versehen werden und in den Anlagenbildern der Bedienung und Beobachtung eingebettet werden.

Die Meldefolgeanzeige stellt Alarme in ihrer größten Detaillierung mit zahlreichen Attributen und Begleitwerten dar. Zu den Alarmattributen gehören beispielsweise Zeitstempel, Priorität, Alarmklasse, ... und ein Pfad in der technologischen Hierarchie, unter dem sich das alarmgebende Prozessobjekt befindet. Auch wenn zahlreiche Filtermöglichkeiten gesetzt sind, ist die Anzahl der darstellbaren Zeilen zur Ausgabe der Alarminformationen in einer Meldefolgeanzeige beschränkt, so dass ein Operator stets nur einen Auszug (z.B. chronologisch sortiert) der tatsächlich anstehenden Alarme sehen kann und für eine Einordnung und Priorisierung blättern muss. Aus der EP 2 188 688 B1 hingegen ist ein kontextspezifisches Meldefenster bekannt, welches zur besseren Übersicht eine Meldefolgeanzeige enthält, deren Einzelmeldungen unter Ausnutzung der Informationen eines Datenmodells, welches Beziehungen von Meldequellen und Kontexten enthält, automatisch ermittelt. Durch Anwählen eines Symbols im Anlagenbild öffnet sich das Meldefenster, in dem die Einzelmeldungen aus dem Datenmodell hinterlegt sind.

Neben den detaillierten und umfangreichen Meldefolgeanzeigen werden auf der graphischen Benutzeroberfläche eines Leitsystems auch noch so genannte Alarmübersichten in nichtverdeckbaren Gesamtübersichten angeboten, über die der Operator zu den entsprechenden alarmgebenden Objekten springen kann. Alarmübersichten werden heruntergebrochen bis auf die Ebene des Anlagenbildes, d.h. auch für ein Anlagenbild kann der Operator über dessen Gruppenalarm sehen, was jeweils die wichtigsten Alarme sind. Der Kontext ist dabei vorgegeben und richtet sich nach im Engineering der Anlage vorprojektieren Anlagenteilen oder Dokumenten.

Hat ein Operator ein Anlagenbild aufgeschlagen und zusätzlich noch weitere zahlreiche Objekte geöffnet (weitere Anlagenbilder in Bild-in-Bild Fenstern, Faceplates, Schrittketten, Batch Rezepte oder diverse Anwenderselektionen), so hat er keine Information darüber, welches der gegenwärtig wichtigste Alarm ist von all den Objekten und Anlagenbildern, die er gerade offen hat - die Priorisierung muss in diesem Fall mühsam und manuell ermittelt werden. Noch herausfordernder für den Operator wird es, wenn im Mehrquadranten-Betrieb bedient und beobachtet wird, d.h. gleichzeitig (auch auf mehreren Monitoren) mehrere Anlagenbilder aufgeschlagen sind, in denen zusätzlich noch weitere Bildfenster und Objekte geöffnet sind.

Der Erfindung liegt daher die Aufgabe zugrunde, ein verbessertes Verfahren zur Bedienung und Beobachtung einer technischen Anlage anzugeben, das dem Operator insbesondere bei einer Vielzahl von geöffneten Bildschirmfenstern ein effizienter geführtes Management von Meldungen erlaubt und mehr Unterstützung bei der Priorisierung und Evaluierung von Meldungen bietet. Des Weiteren soll ein zur Durchführung des Verfahrens besonders geeignetes Bedien- und Beobachtungssystem und ein entsprechendes Prozessleitsystem für eine technische Anlage angegeben werden.

Diese Aufgabe wird durch ein Verfahren mit den Merkmalen des Anspruchs 1 gelöst. Außerdem wird die Aufgabe durch ein Bedien- und Beobachtungssystem gemäß Anspruch 7 und ein Prozessleitsystem gemäß Anspruch 9 gelöst. Vorteilhafte Weiterbildungen ergeben sich aus den abhängigen Ansprüchen.

Die Erfindung geht dabei von der Überlegung aus, dass gerade im Hinblick auf die üblicherweise hohe Komplexität und Vielfalt der anlagenrelevanten Informationen bei einer Vielzahl von geöffneten Anlagenbildern und Bildfenstern eine besonders hohe Benutzer- und Bedienfreundlichkeit bei der Überwachung einer technischen Anlage erreichbar ist, indem das Bedienpersonal bei den zu treffenden Entscheidungen die bestmögliche Unterstützung erhält, insbesondere im Hinblick auf die Ermittlung der wichtigsten Meldung.

Das erfindungsgemäße Verfahren zum Bedienen und Beobachten einer technischen Anlage, in der ein Prozess mittels eines Prozessleitsystems gesteuert wird, sieht dafür vor, zu ermitteln, welche Anlagenbilder und Bildfenster auf der graphischen Benutzeroberfläche geöffnet sind, welche Prozessobjekte pro geöffnetem Anlagenbild und geöffnetem Bildfenster vorhanden sind, und welche dieser Prozessobjekte Meldungen erzeugen. Für die Prozessobjekte der geöffneten Anlagenbilder und Bildfenster werden anschließend alle Meldungen nach vorgebbaren Kriterien gefiltert und die wichtigste, neueste und nicht quittierte Meldung ermittelt. Ein Operator wird über zumindest einen Indikator auf der graphischen Benutzeroberfläche auf das Vorliegen der wichtigsten, neuesten und nicht quittierten Meldung im Kontext der geöffneten Anlagenbilder und Bildfenster hingewiesen, damit er in den Prozess eingreifen kann. Auf diese Weise wird vorteilhaft aus der Vielzahl der ermittelten Meldungen die neuste, wichtigste und nicht quittierte ermittelt, um den Operator bei einer priorisierten Behebung zu unterstützen. Das erfindungsgemäße Verfahren ist insbesondere in einem Bedien- und Beobachtungssystem eines Prozessleitsystems mit zumindest einem Client und einem Server ausführbar oder kann als Softwarekomponente ausgebildet sein, welche in den Speicher eines Servers ladbar ist und dort ausgeführt werden kann.

Hierbei soll der Begriff der Meldung jeden Bericht und jede Anzeige vom Eintreten eines spezifischen Ereignisses umfassen. Im engeren Sinne wird der Begriff jedoch nur für diejenigen Meldungen gebraucht, die keine unverzügliche Reaktion des Operators erfordern, während der Begriff des Alarms eine Anzeige oder einen Bericht vom Eintreten eines Ereignisses umfasst, welches eine unverzügliche Reaktion des Operators erfordert. Die Reaktion kann dabei eine Tätigkeit beinhalten, zum Beispiel das Ausführen einer Bedienhandlung. Es kann sich aber auch ausschließlich um eine mentale Reaktion handeln, zum Beispiel eine erhöhte Aufmerksamkeit.

Bei den Filterkriterien handelt es sich insbesondere um Kriterien der Kritikalität oder Priorisierung, also einer eindeutigen Einteilung der Meldungen nach ihrer Wichtigkeit und Dringlichkeit. In diesem Fall wird bei der Filterung zusätzlich die Quittierung berücksichtigt, denn letztendlich sollen nur die nicht quittierten Meldungen angezeigt werden, die das Bedienpersonal noch nicht zur Kenntnis genommen hat. Die Priorisierung kann beliebig vorgegeben werden, z.B. auch nach der erforderlichen Reaktionszeit, in Abhängigkeit von der aktuellen Anlagensituation oder der Kombination von anderen anstehenden Meldungen oder Alarmen.

Kern der Erfindung ist die Verknüpfung der Ermittlung der geöffneten Anlagenbilder und Bildfenster, der darin enthaltenen Prozessobjekte und der Signalquellen der Prozessobjekte. All diese Informationen laufen im Visualisierungsdienst zusammen und werden dort zur Laufzeit des Prozessleitsystems (in der entsprechenden Taktrate oder kontinuierlich) ständig aktualisiert. Diese Dynamisierung erlaubt es, auf jede Änderung bei der Öffnung der Bildfenster oder auf die Änderung der aufkommenden Meldungen bestmöglich zu reagieren, da der Indikator dies instantan anzeigt. Der Vorteil ist daher, dass der Operator in seinem Visualisierungskontext der geöffneten Anlagenbilder mit den darin geöffneten Bildfenstern und Objekten nicht nur alle kontext-relevanten Meldungen oder Alarme ermitteln kann, sondern dass die wichtigste, neueste und nicht quittierte Meldung automatisch und dynamisch ermittelt und über zumindest einen Indikator auf der graphischen Benutzeroberfläche angezeigt wird.

In einer vorteilhaften Ausführung der Erfindung wird die wichtigste, neueste und nicht quittierte Meldung nicht nur über zumindest einen Indikator angezeigt, sondern der Operator erhält noch weiterhin die Möglichkeit, zu dem computerimplementierten Bildelement auf dem Anlagenbild, welches die Meldung auslöst, hinzunavigieren und somit schnell und effizient die Ursache der Meldung zu ermitteln. In dieser Ausführung ist der Indikator als interaktives Bildelement ausgestaltet. Beim Auslösen des interaktiven Bildelements des Indikators auf der graphischen Benutzeroberfläche wird das Bildelement hervorgehoben, welches mit dem die wichtigste Meldung auslösenden Prozessobjekt verknüpft ist, und/oder es wird neben den geöffneten Anlagenbildern und Bildfenstern eine Meldefolgeanzeige dargestellt, welche eine Liste der gefilterten Meldungen enthält, wobei die wichtigsten, neuesten und nicht quittierten Meldungen hervorgehoben sind. Auf diese Weise erhält das Bedienpersonal instantan Aufschluss darüber, an welcher Stelle sich ein Zustand einer Komponente in der technischen Anlage geändert hat, um situationsgerecht eine Handlungsentscheidung zu treffen und umzusetzen. Bei den hervorgehobenen Bildelementen handelt es sich vorteilhaft entweder um das Bildfenster, das mindestens ein Symbol enthält, das mit dem die wichtigste Meldung auslösenden Prozessobjekt verknüpft ist, oder es handelt sich um das mindestens eine Symbol, das mit dem die wichtigste Meldung auslösenden Prozessobjekt verknüpft ist. Dies erlaubt eine bessere Übersichtlichkeit und erleichtert signifikant die Bedienung und Beobachtung der Anlage.

In einer besonders vorteilhaften Ausführung der Erfindung passt sich der Indikator und die zugehörigen Hervorhebungen der Bildfenster und/oder die Einzelmeldungen in der Meldefolgeanzeige dynamisch und zur Laufzeit an den Kontext der geöffneten Anlagenbilder und Bildfenster an. Derartige dynamisch zur Laufzeit kontextverarbeitende Alarmübersichten und Meldefolgeanzeigen erlauben ein optimales und sehr effizientes Alarmmanagement bei der Bedienung und Beobachtung technischer Anlagen, bei dem kontinuierlich die wichtigsten Zustandsänderungen erfasst und angezeigt werden.

In einer vorteilhaften Ausführungsvariante ist der Indikator konfigurierbar. Mit konfigurierbar sind funktionale Konfigurationen erfasst z.B. hinsichtlich der Kritikalität der Meldungen, die eingestellt wird. Insbesondere sind jedoch Konfigurationen der Darstellung des Indikators auf der graphischen Benutzeroberfläche gemeint. Die graphischen Darstellungen können beispielsweise durch optische oder akustische Signalgeber ergänzt werden. Der Operator wird auf diese Weise besonders zuverlässig über das Auftreten einer Meldung oder eines Alarms informiert.

In einer besonders vorteilhaften Ausführungsvariante wird der Indikator in einem separaten Bildelement angezeigt oder die Anzeige des Indikators erfolgt zusammen mit Prozessalarmen in Gruppenalarmanzeigen. Auf diese Weise kann die Darstellung der Alarmanzeige für beliebige Anwendungen angepasst werden.

Im Folgenden wird die Erfindung sowie deren Ausgestaltungen anhand der Figuren, in denen ein Ausführungsbeispiel der Erfindung dargestellt ist, näher beschrieben und erläutert.

Es zeigen:
- Figur 1: eine graphischen Benutzeroberfläche eines Operator Station Clients mit einer Bedienansicht mit aufgeschlagenem Anlagenbild und weiteren Bildfenstern nach dem Stand der Technik,
- Figur 2: eine Ausführungsform einer Bedienansicht aus Fig. 1 mit einem erfindungsgemäßen Indikator und zugehörigen hervorgehobenen Bildfenstern und zugehöriger Meldefolgeanzeige,
- Figur 3: ein Funktionsschema eines Prozessleitsystems zur Steuerung eines Prozesses mit einem Operator Station Client und mit einem Operator Station Server mit angedeuteter Softwarearchitektur zur Implementierung des erfindungsgemäßen Verfahrens.

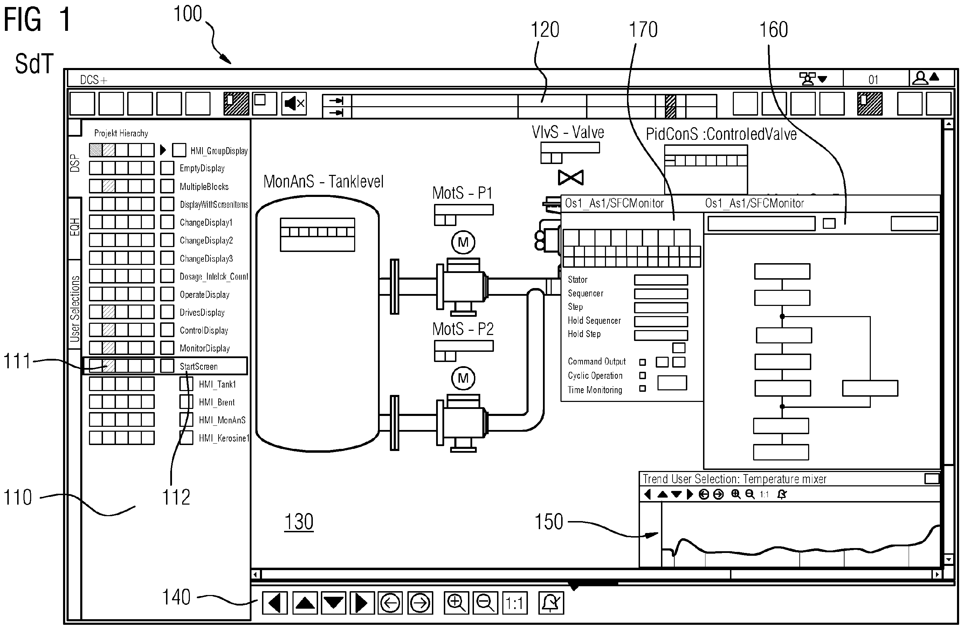

Figur 1 zeigt eine graphischen Benutzeroberfläche 100 eines Operator Station Clients eines Bedien- und Beobachtungssystems eines Prozessleitsystems mit einer beispielhaften Bedienansicht nach dem Stand der Technik. Die graphische Benutzeroberfläche 100 umfasst auf der linken Seite der Benutzeroberfläche eine Übersichtsanzeige über die anwählbaren Anlagenbilder, die so genannte Anlagenbildhierarchie 110, einen allgemeinen Alarmanzeigebereich 120, welcher sich in einer Leiste über den gesamten oberen Bereich der Benutzeroberfläche erstreckt, einen Anlagenbildbereich 130 mit zugehörigen Bildfenstern und ein so genanntes Operator-Panel 140 unterhalb des Anlagenbildbereichs.

Die Anlagenbildhierarchie 110 umfasst neben den Gruppenalarmen 111 eine hierarchische Sicht der zu steuernden Anlage. Darin sind strukturiert Knoten 112 eingetragen bzw. hinterlegt, die mit Anlagenbildern, wie hier z.B. "Monitor Display", verknüpft sind. Die jeweiligen Anlagenbilder können online, d.h. während der Prozesssteuerung - geöffnet werden, indem zur Prozessbeobachtung ein Operator jeweils den entsprechenden Anlagenbild-Knoten der Bildhierarchie selektiert bzw. mittels einer "Maus" anklickt, wodurch das dem selektierten Anlagenbild-Knoten zugehörige Anlagenbild geöffnet und auf dem Operator Station Client dargestellt wird.

In dem Alarmanzeigebereich 120 repräsentieren Symbole sämtliche Alarme im Zusammenhang mit Komponenten der verfahrenstechnischen Anlage. Dabei handelt es sich um die Alarmklassen der Leittechnikalarme, Prozessalarme und Bedienmalarme. Die Farben der angezeigten Symbole repräsentieren die Dringlichkeit, mit welcher auf die Alarme reagiert werden muss (Alarmpriorisierung) .

Im Anlagenbildbereich 130 können zusätzlich zum Anlagenbild noch weitere Bildfenster 150, 160 und 170 geöffnet sein. So zeigt das Bildfenster 150 eine Trend-Anzeige, in welcher die zeitliche Änderung eines Prozesswertes dargestellt ist, das Bildfenster 160 zeigt das Schema einer Schrittkette, anhand dessen die einzelnen Schritte einer Motorsteuerung ablesbar sind und das zugehörige Faceplate 170, welches weitere Informationen im Zusammenhang mit der Schrittkette anzeigt.

Über das Operator-Panel 140 werden insbesondere Zoom- und Bildnavigationsfunktionen in Bezug auf den Anlagenbildbereich 130 bereitgestellt.

Ein Anlagenbild stellt die Zusammenhänge - insbesondere zwischen den einzelnen funktionalen Einheiten oder Komponenten der verfahrenstechnischen Anlage - abstrahiert dar und setzt sich aus verschiedenen Bedien- und Anzeigeelementen zusammen. Dazu gehören: statische Symbole (z.B. Leitungen, Tanks, Pumpen usw.), dynamisierte Symbole (z.B. in Abhängigkeit von Prozesswerten Leitungen mit Farbumschlag, Rechtecke mit Füllständen, usw.), Block-Symbole (zur dynamisierten Visualisierung verfahrenstechnischer Prozessobjekte), komplexe Kontrollanzeigen (z.B. Trendanzeigen, Meldefolgeanzeigen, usw.) und so genannte Container, welche in abgeschlossenen Bildeinheiten oder Bild-in-Bild-Fenstern dargestellt werden, um Inhalte aus unabhängigen und eigenständigen Quellen visualisieren zu können.

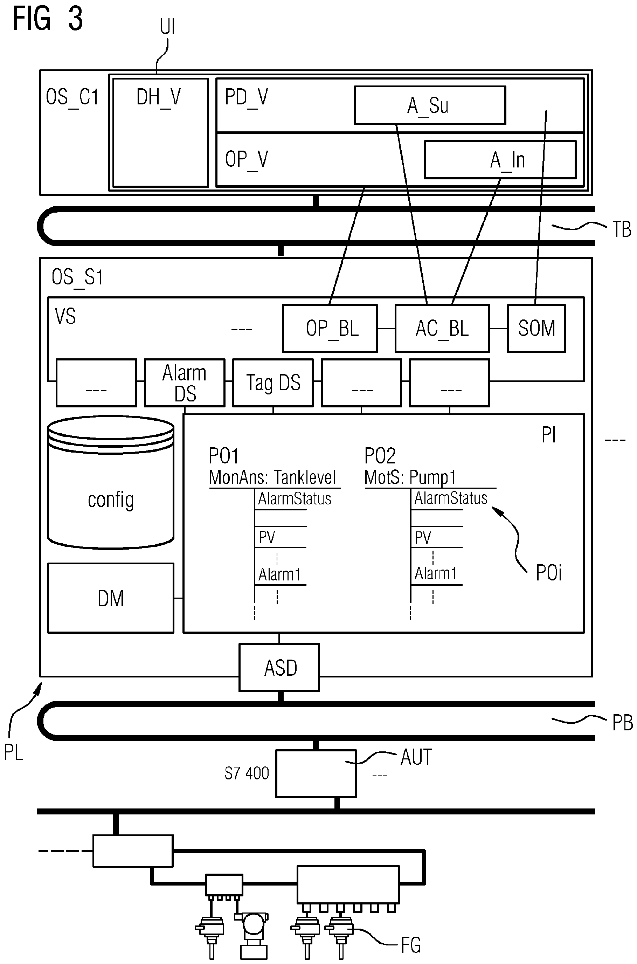

Die in den Anlagenbildern dargestellten Symbole werden durch Prozesswerte von so genannten Prozessobjekten (POi, vgl. Figur 3) gespeist oder dynamisiert, die in einem Prozessabbild (PI, vgl. Figur 3) eines Operator Station Servers (OS_S1, vgl. Figur 3) des Prozessleitsystems lokalisiert sind. Das computerimplementierte, im Prozessabbild lokalisierte Prozessobjekt ist stets einer technischen Komponente der technischen Anlage zugeordnet und steht mit dieser in Wirkverbindung. Der Begriff "dynamisiert" wird hier stellvertretend für eine zeitliche Änderung der Prozesswerte und damit auch für die zeitliche Änderung der Visualisierung der technischen Komponente verwendet.

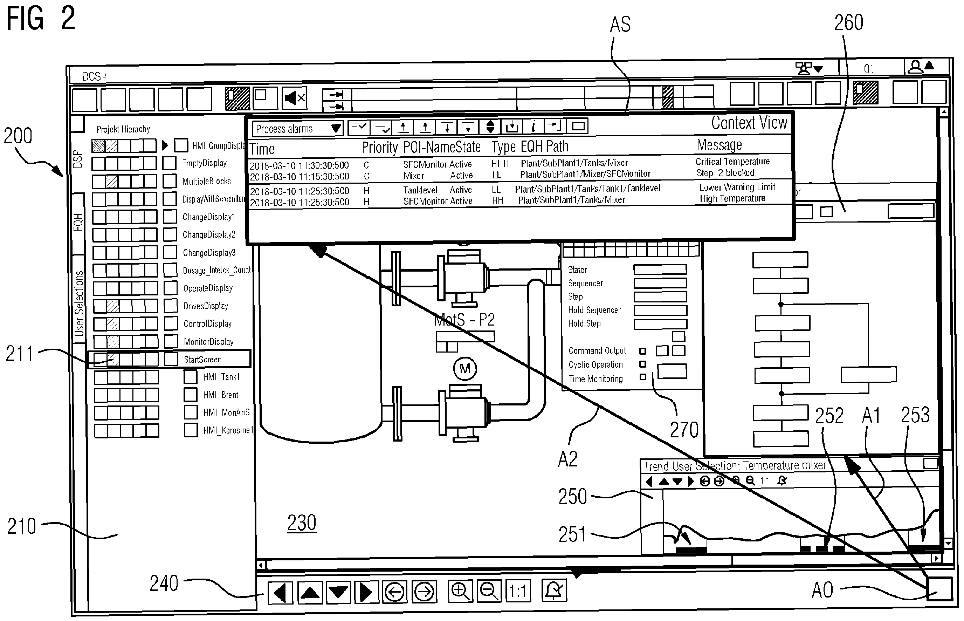

In Figur 2 ist die Bedienansicht 100 aus Figur 1 um erfindungsgemäße Merkmale erweitert worden. Das Ausführungsbeispiel zeigt eine Bedienansicht 200, welche einem Operator erlaubt, instantan den wichtigsten, neusten und nicht quittierten Alarm der geöffneten Anlagenbilder und Bildfenster zu identifizieren und die Quelle dieses Alarms festzustellen. In diesem Ausführungsbeispiel wird das so genannte Operator Panel 240 unterhalb des Anlagenbildes (mit Schaltflächen für Anlagenbildwechsel, usw.) erfindungsgemäß um einen Indikator AO (engl. Alarm Overview) erweitert, der den Kontext des geöffneten Anlagenbildes mit allen darin und darüber visualisierten Bildelementen und Bildfenstern berücksichtigt. Der Indikator kann dabei beliebig konfiguriert und ausgestaltet sein. In diesem Ausführungsbeispiel handelt es sich bei dem Indikator AO um ein quadratisches Bildsymbol in der rechten unteren Ecke der Benutzeroberfläche, welches in der Farbe der Alarmdringlichkeit dargestellt ist. (z.B. rot für "dringend" und violett für "kritisch"). Unter "Kontext" ist in diesem Zusammenhang stets gemeint, dass eine Kopplung zwischen Alarmen und geöffneten Anlagenbildern oder Bildfenstern besteht. Der Indikator AO zeigt nur die Alarmdringlichkeit der geöffneten Bildelemente an und passt sich dynamisch zur Laufzeit an diesen Kontext an. Dies bedeutet, dass wenn ein Operator ein neues Fenster öffnet, in welchem ein Prozessobjekt mit einer höheren Alarmdringlichkeit als der der bereits geöffneten Fenster enthalten ist, so übernimmt der Indikator AO diese Alarmdringlichkeit. Denkbar ist ebenso, dass in einem geöffneten Fenster ein Alarm aufpoppt, der eine höhere Priorität als die bereits vorhandenen besitzt, so würde der Indikator AO beispielsweise die Farbe wechseln, um anzuzeigen, dass sich innerhalb der geöffneten Bildfenster die Alarmpriorität verändert hat. Die Bereiche 251 und 253 der Trendanzeige im Bildfenster 250 zeigen Bereiche, die im Gegensatz zum Bereich 252 einen kritischen Alarm auslösen. Sobald diese Alarme auftreten (sei es durch Öffnen des Bildfensters 250 oder aufgrund der Prozessdynamik) wechselt die Farbe des Indikators auf "violett", um dem Auftreten dieser kritischen Alarme Rechnung zu tragen. Ist lediglich ein Anlagenbild ohne weitere Bildfenster geöffnet, so entspricht der Indikator AO dem Gruppenalarm 211 des Anlagenbildes der Anlagenbildhierarchie für den wichtigsten, neusten und nicht quittierten Alarm.

Öffnet ein Operator nun weitere Bildfenster (weitere Anlagenbilder, Trendanzeigen, Faceplates von Prozessobjekten, die nicht im geöffneten Anlagenbild enthalten sind, z.B. über Alarm Loop-Ins oder aus der technologischen Hierarchie heraus, visualisierte Schrittketten oder Batch Rezepte), so werden die Alarme der zusätzlich zu dem Anlagenbild geöffneten und dargestellten Objekte oder Bildfenster bei dem Indikator mitberücksichtigt und die Alarmklasse wird entsprechend angepasst. Der Operator erhält somit für seinen aktuellen Sichtbereich in der Bedienansicht während der Bedienung und Beobachtung stets Rückmeldung zum wichtigsten Alarm, um den er sich primär kümmern sollte. Dabei spielt es keine Rolle, ob die Bedienansicht wie im Ausführungsbeispiel nur einen Quadranten oder mehrere Quadranten (mehrere Anlagenbilder sind in einem Monitor geöffnet oder auf mehrere Monitore verteilt, wie beispielsweise in einer Leitwarte) umfasst.

In einer Ausführungsvariante ist der Indikator AO interaktiv ausgestaltet, d.h. dass z.B. durch Anklicken des Bildsymbols AO weitere Informationen auf der graphischen Benutzeroberfläche angezeigt werden. Dabei (vgl. Pfeil A1 in Fig. 2) wird beispielsweise das Objekt oder Bildfenster (hier Bildfenster 260) hervorgehoben, von dem zu diesem Zeitpunkt der wichtigste Alarm ausgeht. Alternativ oder zusätzlich (vgl. Pfeil A2 in Fig. 2) kann eine diesen Kontext verarbeitende Meldefolgeanzeige AS (engl. Alarm Summary) geöffnet werden, die alle Alarme auflistet, die von dem Indikator AO berücksichtigt werden: sowohl alle Alarme aus dem geöffneten Anlagenbild 230, als auch aus den geöffneten Bildfenstern (in Fig. 2 die visualisierte SFC Schrittkette 260 und die Trendanzeige 250 aus der Anwenderselektion) oder Alarme von einzelnen Objekten. Dass es sich bei der Meldefolgeanzeige um eine kontextverarbeitende Meldefolgeanzeige im Sinne dieser Erfindung handelt, kann durch einen Schriftzug "Context View" signalisiert werden (vgl. Fig. 2).

Werden nun weitere Bildfenster oder Objekte geöffnet, bzw. bestehende Bildfenster oder Objekte geschlossen, oder das Anlagenbild gewechselt, so passt sich der Indikator AO automatisch und dynamisch an, genauso wie auch die kontextverarbeitende Meldefolgeanzeige AS (falls sie nicht geschlossen wird).

In Fig. 3 ist ein Funktionsschema von Teilen eines Prozessleitsystems PL zur Steuerung eines verfahrenstechnischen Prozesses oder eines Produktionsprozesses in einer technischen Anlage dargestellt. Bei der technischen Anlage kann es sich um eine verfahrenstechnische Anlage aus der Chemieindustrie, der pharmazeutischen Industrie oder um eine Anlage aus der Nahrungs- und Genussmittelindustrie handeln. Außerdem kann es sich um eine Anlage zur Produktion von Waren handeln, wie einer Auto-Fabrik mit zugehörigen Fertigungsstraßen.

Diese Anlagen verfügen jeweils über ein Prozessleitsystem oder zumindest ein computerunterstütztes Modul zur Steuerung und Regelung des ablaufenden Prozesses oder der Produktion. Das Prozessleitsystem umfasst gewöhnlich Sensoren zur Ermittlung von Messwerten sowie verschiedene Aktoren (hier nicht dargestellt). Zudem umfasst das Leitsystem sogenannte prozess- oder fertigungsnahe Komponenten wie Automatisierungsgeräte, die zur Ansteuerung der Aktoren bzw. Sensoren dienen. Darüber hinaus weist das Leitsystem u.a. Mittel zum Bedienen und Beobachten sowie Mittel zur Visualisierung der technischen Anlage und Mittel zum Engineering auf. Unter dem Begriff Leitsystem sind zusätzlich auch weitere Recheneinheiten für komplexere Regelungen und Systeme zur Datenspeicherung und Datenverarbeitung eingeschlossen.

In der Figur ist nur ein Teil eines Prozessleitsystems dargestellt, das im Wesentlichen ein Bedien- und Beobachtungssystem mit seinen Bestandteilen umfasst. Das Bedien- Und Beobachtungssystem umfasst im vorliegenden Ausführungsbeispiel einen Operator Station Client OS_C1 (im Folgenden als OS Client abgekürzt) und einem Operator Station Server OS_S1 (im Folgenden als OS Server abgekürzt). Das Prozessleitsystem PL kann selbstverständlich eine Vielzahl von OS Clients, OS Servern, Automatisierungsgeräten AUT, Feldgeräten FG etc. aufweisen. Die Automatisierungsgeräte AUT sind einerseits über einen Anlagenbus PB, der in der Regel als Industrial Ethernet-Bus ausgebildet ist, mit den OS Servern und andererseits über mindestens einen weiteren so genannten Feldbus mit dezentralen Peripherien verbunden, an welche eine Vielzahl von Feldgeräten FG (Sensoren, Aktuatoren) angeschlossen sind.

Zur Bedienung und Beobachtung tauscht der OS Client (hier OS_C1) über ein weiteres Bussystem TB, welches hier als Terminalbus bezeichnet wird, Informationen und Daten mit den OS-Servern (hier nur OS_S1 dargestellt) aus. Häufig ist das Prozessleitsystem derart ausgebildet, dass es mindestens eine weitere Komponente wie beispielsweise eine Engineering Workstation (hier nicht dargestellt) besitzt. Bei dieser handelt es sich um einen Rechner oder Server, der zur Datenübertragung an mindestens eines der Kommunikationssysteme TB und PB angeschlossen ist, und auf den ebenso über einen Client des Bedien- und Beobachtungssystems zugegriffen werden kann. Bei Bedarf können noch weitere Rechner oder Server mit den Kommunikationssystemen TB und PB verbunden werden.

In der Figur sind neben Teilen der soeben beschriebenen Hardware-Konfiguration des Prozessleitsystems auch Teile der Software-Architektur zur Implementierung des erfindungsgemäßen Verfahrens in vereinfachter Form dargestellt. So sind im OS Server und OS Client eine Vielzahl von Funktionen zur Erzeugung von Anlagenbildern und sonstigen Anzeigen (engl. Display) als Software-Bausteine oder Software-Komponenten (hier in Form von Rechtecken, abgekürzt SW-Komponenten) dargestellt.

In der in Fig. 3 gezeigten Ausführung sind insbesondere die SW-Komponenten des OS Servers dargestellt, die für die Erzeugung der in den Figuren 1 und 2 gezeigten Bildelemente der graphischen Benutzeroberfläche (Anlagenbilder, Operator Panel etc.) wesentlich sind. Dazu gehören insbesondere der Visualisierungsdient VS und das Prozessabbild PI des OS Servers OS_S1 und die SW-Komponenten DH (Display Hierarchie), PD (Plant Display) und OP (Operator Panel) des OS Clients OS_C1. Dabei ist die SW-Komponente DH des OS Clients verantwortlich für die Erzeugung der Anlagenbildhierarchie 110, die SW-Komponente PD für die Erzeugung der Anlagenbilder 130, 230 und die SW-Komponente OP für die Erzeugung des Operator Panels 140.

Die Übermittlung von (Visualisierungs-)Daten an den OS Client erfolgt mittels des bereits erwähnten Visualisierungsdienstes VS des OS Servers. Der Visualisierungsdienst VS selbst wiederum ist über diverse Schnittstellen (wie beispielsweise die Schnittstellen "Alarm DS" und "Tag DS") mit den Datenquellen innerhalb des Prozessabbilds PI verbunden. Der Visualisierungsdienst verfügt damit über alle Informationen, die über die Komponenten des Prozessabbilds PI, die computerimplementierten Prozessobjekte POi, bekannt sind, um diese an einen angeschlossenen OS Client zur grafischen Darbietung übertragen zu können.

Bei dem Prozessabbild PI eines OS Servers handelt es sich um eine Art Datenbank, in der alle Daten wie Prozesswerte oder Alarme der Prozessobjekte POi verwaltet werden, welche zur Laufzeit der technischen Anlage empfangen werden. Ein Prozessobjekt POi ist einer funktionalen Einheit oder Komponente der verfahrenstechnischen Anlage oder Produktionsanlage zugeordnet und steht mit diesen entsprechend in einer Wirkverbindung. Zu den Prozessobjekten gehören alle bedien- und beobachtbaren Bausteine eines CFS-Plans (CFC = Continuous Function Charts) einer technischen Anlage wie beispielsweise ein Motor oder Ventil, Objekte zur Automatisierung wie z.B. Füllstandsregelungen oder Motorsteuerungen oder Objekte zur Signalerfassung und Signalverarbeitung. Prozessobjekte POi sind stets mit einer Messstelle verbunden. Das Prozessobjekt PO1 in Fig. 3 ist mit der Bezeichnung "MonAnS:Tanklevel" versehen und steht mit der Messstelle eines Füllstands eines Tanks in Wirkverbindung. Es weist eine Anzahl an zugeordneten Parametern auf, wie ein Alarmstatus, eine Prozessvariable PV oder eine Alarm-Meldung. Das Prozessobjekt PO2 in Fig. 3 ist mit der Bezeichnung "MotS:Pump1" versehen und steht mit einem Motor einer Pumpe in Wirkverbindung und weist entsprechende Parameter auf, die den Zustand des Motors charakterisieren. Die Prozessvariablen erhalten die Prozessobjekte POi über den Treiber ASD, welcher wiederum mit dem Anlagenbus PB verbunden ist und über welchen sowohl der OS Server, als auch das Prozessabbild PI mit allen Informationen aus der Feldebene versorgt werden. Alle für das Prozessabbild PI relevanten Daten können in einem Datenmanager DM verwaltet und sämtliche Konfigurationen der Prozessabbilder und Anlagenvisualisierungen in einer Datenbank Config abgelegt werden.

Hat nun ein Operator mindestens ein Anlagenbild, eine Vielzahl weiterer Bildfenster und Bild-in-Bild-Fenster (ggfs. übereinander und/oder auf mehreren Bildschirmen) geöffnet und den Überblick über die in den Bildfenstern geöffneten Alarme verloren, so unterstützt die Erfindung nun bei der Ermittlung des wichtigsten, neuesten und nicht quittierten Alarms.

Dazu ermittelt der Visualisierungsdienst kontinuierlich, also dynamisch zur Laufzeit des Prozessleitsystems, welche Anlagenbilder und Bildfenster geöffnet sind, welche Prozessobjekte pro geöffnetem Anlagenbild und geöffnetem Bildfenster vorhanden sind, und welche dieser Prozessobjekte Meldungen erzeugen. In der in Fig. 3 gezeigten Ausführungsvariante, werden die genannten Verfahrensschritte in einer Softwarekomponente AC_BL (Alarm Control-Business Logic) ausgeführt. Eine Verteilung auf mehrere SW-Komponenten ist ebenso denkbar. Die Komponente AC-BL kommuniziert einerseits über die Schnittstellen des Visualisierungsservices Alarm DS und Tag DS mit dem Prozessabbild, von welchem sie alle in diesem Moment vorliegenden Alarme erhält, und andererseits mit der Komponente SOM, welche den Überblick über alle auf dem mindestens einen OS Client geöffneten Bildfenster besitzt. Über die SW-Komponente SOM (engl. Screen Object Model) eines geöffneten Anlagenbildes kann kontinuierlich ermittelt werden, welche Bildfenster und Objekte neben dem Anlagenbild geöffnet sind. Dies wird der Alarm Control-Business Logik-Komponente kontinuierlich gemeldet, welche parallel kontinuierlich abfragt, welche Prozessobjekte der geöffneten Anlagenbilder und Bildfenster Alarme sendet.

Im Allgemeinen werden Alarme und Meldungen durch die Komponente eines so genannten Event-Managers (nicht dargestellt) aus der Komponente des Prozessabbildes PI entnommen und in dieser aufbereitet. Die unterschiedlichen Meldeklassen, insbesondere die Alarme, werden zusammen mit anderen darzustellenden Variablen, wie beispielsweise den Prozesswerten, an den Visualisierungsservice VS weitergegeben, wo eine weitere Verarbeitung in weiteren Logiken, wie der Logik AC-BL oder OP_BL, stattfinden kann. In dem gezeigten Ausführungsbeispiel ist die Logik AC_BL für die Filterung der Alarme und die Hervorhebung der Alarme im Anlagenbild und Operator Panel zuständig. Hierzu kommuniziert die Logik mit zugehörigen SW-Komponenten A_Su und A_In im OS Client. A_In erzeugt den Indikator und A_Su die erfindungsgemäße Meldefolgeanzeige. Da in dem Ausführungsbeispiel der Indikator als Bildelement im Operator Panel ausgeführt ist, ist auch die Logik OP-BL an der Bilderzeugung im OS Client beteiligt.

Die Berechnung der Alarmübersicht durch die Komponente "Alarm Control" AC_BL kann ereignisgesteuert (was den Prozess angeht) und/oder im Hinblick auf den Kontext der geöffneten Anlagenbilder und Bildfenster stattfinden. In dem Moment, in dem sich ein Prozesswert ändert und in einen Wertebereich hineinläuft, der die Anzeige einer Meldung hervorruft, findet auf der Basis dieses Prozesswertes und des vorgegebenen Schwellwertes die Berechnung der Kritikalität der Meldung statt. Jede neue Änderung des Prozesswertes ruft eine Neubewertung der Kritikalitäts-Indikatoren für die Filterung der Meldungen auf, und der Indikator und Einzelmeldungen in der Meldefolgeanzeige (sofern sie bereits aufgeschlagen ist) werden aktualisiert. Gleichzeitig wird mittels der Komponente SOM der Status der geöffneten Fenster überprüft und bei einer Änderung angepasst. Für die Berechnung der Kritikalität einer Meldung müssen somit mindestens die zwei o.g. Bedingungen erfüllt sein. Insofern muss die Neuberechnung des erfindungsgemäßen Indikators vorteilhafterweise nicht bei jedem Zyklus des Automatisierungssystems durchgeführt werden, sondern nur im Falle eines neu eintretenden Ereignisses. Die Prozessoren der Operator Station Server werden daher nicht unnötig belastet.

## Patentansprüche

1. Verfahren zum Bedienen und Beobachten einer technischen Anlage, in der ein Prozess mittels eines Prozessleitsystems (PL) gesteuert wird, wobei das Prozessleitsystem mindestens einen Operator Station Server (OS_S1) und mindestens einen Operator Station Client (OS_C) aufweist, und mit dem Prozess verbundene Prozessobjekte (POi) auf Prozessabbilder (PI) der Operator Station Server des Prozessleitsystems (PL) verteilt sind, und zur Prozessbeobachtung eine grafische Benutzeroberfläche (UI) auf dem Operator Station Client (OS_C) zur Darstellung von Anlagenbildern und zugehöriger Bildfenster mit zu den Prozessobjekten (POi) gehörigen Symbolen und Anzeigen vorgesehen ist,
**dadurch gekennzeichnet, dass** folgende Schritte ausgeführt werden:
- mittels eines Visualisierungsdienstes (VS) des Operator-Station-Servers (OS_S1) wird ermittelt, welche Anlagenbilder und Bildfenster geöffnet sind, welche Prozessobjekte (POi) pro geöffnetem Anlagenbild und geöffneten Bildfenster vorhanden sind, und welche dieser Prozessobjekte Meldungen erzeugen,
- dass kontinuierlich nur für die Prozessobjekte der geöffneten Anlagenbilder und Bildfenster alle Meldungen nach vorgebbaren Kriterien gefiltert werden und die wichtigste, neueste und nicht quittierte Meldung ermittelt wird, und
- dass zumindest ein Indikator (AO) auf der graphischen Benutzeroberfläche einen Operator auf das Vorliegen der wichtigsten, neuesten und nicht quittierten Meldung im Kontext der geöffneten Anlagenbilder und Bildfenster hinweist, damit der Operator in den Prozess eingreifen kann.

2. Verfahren nach Anspruch 1,
**dadurch gekennzeichnet, dass** der Indikator (AO) als interaktives Bildelement ausgestaltet ist und dass beim Auslösen des interaktiven Bildelements auf der graphischen Benutzeroberfläche das Bildelement hervorgehoben wird, welches mit dem die wichtigste Meldung auslösenden Prozessobjekt verknüpft ist, und/oder neben den geöffneten Anlagenbildern und Bildfenstern eine Meldefolgeanzeige (AS) dargestellt wird, welche eine Liste der gefilterten Meldungen enthält, wobei die wichtigsten, neuesten und nicht quittierten Meldungen hervorgehoben sind.

3. Verfahren nach Anspruch 2,
**dadurch gekennzeichnet, dass** es sich bei den hervorgehobenen Bildelementen entweder um das Bildfenster, das mindestens ein Symbol enthält, das mit dem die wichtigste Meldung auslösenden Prozessobjekt verknüpft ist, handelt oder um das mindestens eine Symbol, das mit dem die wichtigste Meldung auslösenden Prozessobjekt verknüpft ist.

4. Verfahren nach Anspruch 1 oder 2,
**dadurch gekennzeichnet, dass** der Indikator (AO) und die zugehörigen Hervorhebungen der Bildfenster und/oder die Einzelmeldungen in der Meldefolgeanzeige (AS) sich dynamisch und zur Laufzeit an den Kontext der geöffneten Anlagenbilder und Bildfenster anpassen.

5. Verfahren nach einem der vorhergehenden Ansprüche,
**dadurch gekennzeichnet, dass** der Indikator (AO) konfigurierbar ist.

6. Verfahren nach einem der vorhergehenden Ansprüche,
**dadurch gekennzeichnet, dass** der Indikator (AO) in einem separaten Bildelement angezeigt wird oder die Anzeige des Indikators (AO) zusammen mit Prozessalarmen in Gruppenalarmanzeigen erfolgt.

7. Bedien- und Beobachtungssystem für ein Prozessleitsystem,
welches einen Prozess in einer technischen Anlage steuert, mit mindestens einem Client (OS_C1) und mindestens einem Server (OS_S1), welche über mindestens ein Kommunikationsmittel (TB) miteinander verbunden sind, wobei
jeder Server ein Prozessabbild (PI) aufweist, welches mit dem Prozess verbundene Prozessobjekte (POi) enthält, und
wobei zur Prozessbeobachtung eine grafische Benutzeroberfläche (UI) auf dem Client (OS_C1) zur Darstellung von Anlagenbildern und zugehöriger Bildfenster mit zu den Prozessobjekten (POi) gehörigen Symbolen vorgesehen ist
**dadurch gekennzeichnet,**
- **dass** ein Visualisierungsdienst (VS) des Servers (OS_S1) ausgebildet ist, zu ermitteln, welche Anlagenbilder und Bildfenster geöffnet sind, welche Prozessobjekte pro geöffnetem Anlagenbild und geöffneten Bildfenster vorhanden sind, und welche dieser Prozessobjekte Meldungen erzeugen,
- **dass** der Visualisierungsdienst (VS) ferner dazu ausgebildet ist, dynamisch und zur Laufzeit nur für die Prozessobjekte (POi) der geöffneten Anlagenbilder und Bildfenster alle Meldungen nach vorgebbaren Kriterien zu filtern und die wichtigste, neueste und nicht quittierte Meldung zu ermitteln, und
- **dass** der Visualisierungsdienst (VS) ferner dazu ausgebildet ist, zumindest einen Indikator (AO) auf der graphischen Benutzeroberfläche des Clients anzuzeigen, der auf das Vorliegen der wichtigsten, neuesten und nicht quittierten Meldung hinweist.

8. Bedien- und Beobachtungssystem für ein Prozessleitsystem nach Anspruch 7, wobei auf der graphischen Benutzeroberfläche (UI) ein Bildelement vorgesehen ist, welches den Indikator (AO) enthält und welches interaktiv ausgebildet ist, derart dass beim Auslösen des Indikators auf der graphischen Benutzeroberfläche eine Meldefolgeanzeige (AS) mit den gefilterten Meldungen der geöffneten Anlagebilder und der zugehörigen Bildfenster dargestellt wird, wobei sowohl die Meldungen, welche mit dem die wichtigste Meldung auslösenden Prozessobjekt verknüpft ist, als auch entsprechende Symbole und/oder die geöffneten Bildfenster, welche mit die wichtigste Meldung auslösenden Prozessobjekten verknüpft sind, hervorgehoben sind.

9. Prozessleitsystem zur Steuerung eines Prozesses in einer technischen Anlage, welches ein Bedien- und Beobachtungssystem gemäß Anspruch 7 oder 8 aufweist.
